# EUROPEAN PATENT APPLICATION

(11) **EP 0 592 865 A1**
(43) Date of publication of application: **20.04.1994**
(21) Application number: 93115679.8
(22) Date of filing: 29.09.1993
(51) Int. Cl.: G06K 1/12

(54) **A process for recording information by magnetisation on a mechanical part**

(30) Priority: 15.10.1992 IT TO920834
(71) Applicant: FIAT AUTO S.p.A., I-10135 Torino (IT)
(72) Inventor: Ansaldi, Ermanno, I-10139 Torino (IT); Malvicino, Carloandrea, I-10146 Torino (IT); Rolando, Bruno, I-12031 Bagnolo Piemonte (Cuneo) (IT); Mollo, Mauro, I-10138 Torino (IT); Nicola, Gianluigi, I-10144 Torino (IT)
(74) Representative: Gerbino, Angelo

(57) **Abstract**

The process has the object of recording information by magnetisation on at least one integral ferromagnetic portion of a mechanical part (10). This information enables the mechanical part (10) to be identified during working and/or assembly operations.

## Description

The present invention relates to a process for recording information by magnetisation on at least one integral ferromagnetic portion of a mechanical part.

The process according to the invention is characterised by the fact that the said information enables the mechanical part to be identified during working and/or assembly operations.

The part can thus be identified very much more rapidly and with much greater certainty than by traditional methods in which the part has an associated card on which its identification data are recorded and the process is particularly indicated for use in automated working processes.

One advantage of the process according to the invention lies in that fact that the ferromagnetic portion of the part to be identified does not require particular working or cleaning treatments: in particular particles of grease, dust and the surface roughness do not detrimentally influence the magnetisation process.

Preferably the said information is recorded in the form of a binary code with a magnetisation intensity less than or equal to 5 Gauss.

Such a low magnetisation intensity is in fact sufficiently low not to attract any ferrous dust or chips which could adhere to the surface of the part and thereby damage it.

In a preferred embodiment the magnetisation treatment according to the invention is applied to the outer cylindrical surface of an end flange of a crank shaft and the information recorded on this latter identifies the general type of the crank shaft, the connecting rod journals, the main bearing journals and the thrust bearing face of this latter.

In this way the choice of hearing to associate with each main bearing journal and connecting rod journal and with the thrust bearing face can be made by an automated system on the basis of the data recorded magnetically on the outer cylindrical surface of the flange of the crank shaft, thereby significantly reducing the time necessary for this operation and the possibility of human error occuring.

Further examples of mechanical parts to which the process of the invention can be applied are: engine blocks, timing shafts, counter-rotating shafts, valves, tappets, pulleys, phonic wheels, half shafts, gearbox gears, gearbox shafts, fly wheels, constant velocity joints, engine supports, rods, struts, differentials and brake discs. The coded information on these parts can relate to their general type or to a more specific type such as, for example, the gear ratios for a gear box, the bridge ratios for a differential, the type of cams for an engine block, whether the half shaft or timing shaft is a right-or left-hand shaft.

Further advantages and characteristics of the present invention will become apparent from the following detailed description made with reference to the appended drawings, provided by way of non-limitative example, in which:
Figure 1 is a diagram which illustrates the various components of a device for performing the process according to the invention,
Figure 2 is a perspective view of an electromagnet forming part of the device of Figure 1,
Figure 3 is a perspective view of a crank shaft which is the subject of the magnetisation processes according to the invention, and
Figure 4 is a graph which plots the magnetisation intensity of a part subjected to a magnetisation process according to the invention as a function of a spatial coordinate.

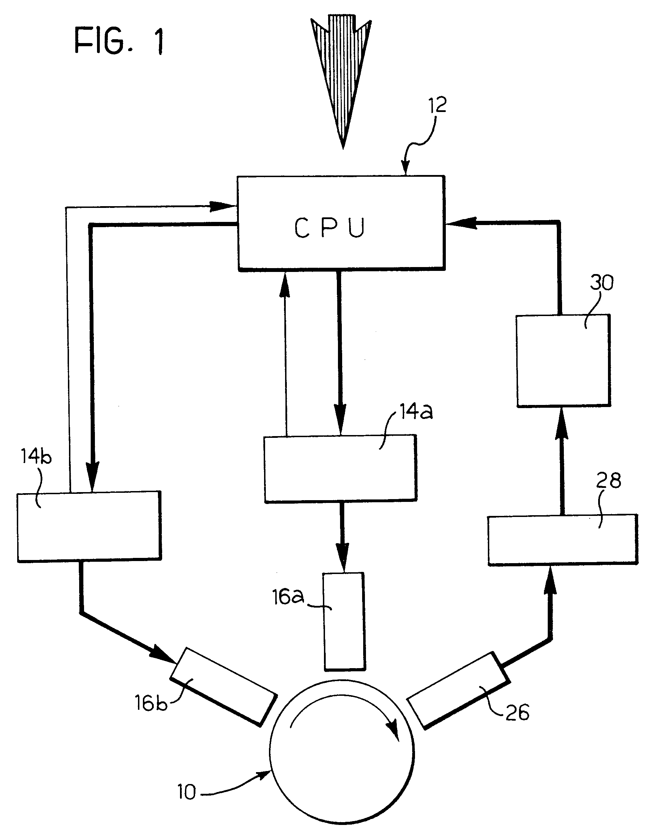

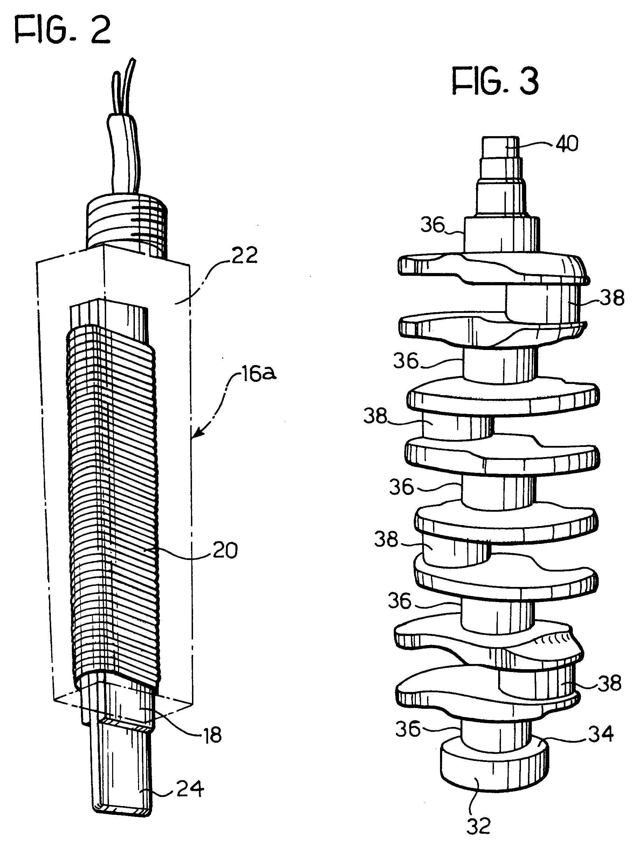

A device for writing and reading information on a mechanical part 10 (Figure 1) comprises a CPU 12 connected to a control circuit 14a of an electromagnet 16a illustrated in detail in Figure 2.

The electromagnet 16a comprises a core 18 of ferromagnetic material, such as soft iron or other materials having a high permeability and very narrow hysteresis cycle, for example Supra 36 or Mumetal (Registered Trade Marks).

An electrical winding 20, embedded in a protective casing 22, surrounds the core 18 from which protrudes a unipolar pole piece 24 rounded at its distal end so that, when brought into contact with the mechanical part 10, it ensures good contact with the surface of this latter over a wide range of inclination of the electromagnet 16a, thereby minimising the air gap.

The CPU 12 (Figure 1) is further connected to a second control circuit 14b and to a second electromagnet 16b similar to the first.

As will become clear from the description below, the electromagnet 16a serves to transcribe information magnetically onto the surface of the part 10, whilst the electromagnet 16b serves to erase unwanted magnetic traces on this surface.

The reference numeral 26 indicates a sensor operable to read information recorded magnetically on the surface of the part 10. This sensor 26 can be of the linear Hall-effect type, chosen for example from models SS89A1, SS94A1, 91SS12-2 or SS94A1F, all produced by Micro Switch (Honeywell).

The sensor 26 is connected via an amplifier 28 and an analog/digital converter 30, both known per se, to the CPU 12.

The electromagnets 16a and 16 and the sensor 26 are disposed around a circle outwardly thereof.

There is now described a process of writing and reading information by means of the device described above, on the cylindrical outer surface 32 of an end flange 34 of a crank shaft illustrated in Figure 3.

In this latter the reference numeral 36 indicates the main bearing journals, the reference numeral 38 indicates the connecting rod journals and the reference numeral 40 indicates the thrust bearing face.

The crank shaft is made of ferromagnetic material, such as cast iron or steel, and can therefore easily be magnetised.

If, on the other hand, it were desired to treat a part not made of ferromagnetic material, it would be necessary to fit an insert of ferromagnetic material into a portion of its surface before commencing the magnetisation treatment.

The crank shaft, schematically indicated 10 in Figure 1, is put into rotation in such a way that the outer surface 32 of the flange 34 turns in front of the unipolar pole piece of the erasing electromagnet 16b.

This latter is supplied with an AC current greater than that which will be utilised subsequently in the writing phase, for the purpose of erasing any existing magnetic imprints on the surface 32.

Then the CPU 12, having received metrological data relating to the crank shaft 10 to be identified, for example from a Marposs measurement station (Registered Trade Mark) or from an operator, converts it into control pulses which are sent to the control circuit 14a of the write electromagnet 16a the pole piece 24 of which is brought into contact with the outer surface 32 of the flange 34.

The electromagnet 16a is from time to time traversed by a DC current of predetermined polarity and intensity and for a specific period of time, thereby producing a magnetic mark on the surface 32 of north or south polarity according to the direction of flow of the current which traverses it.

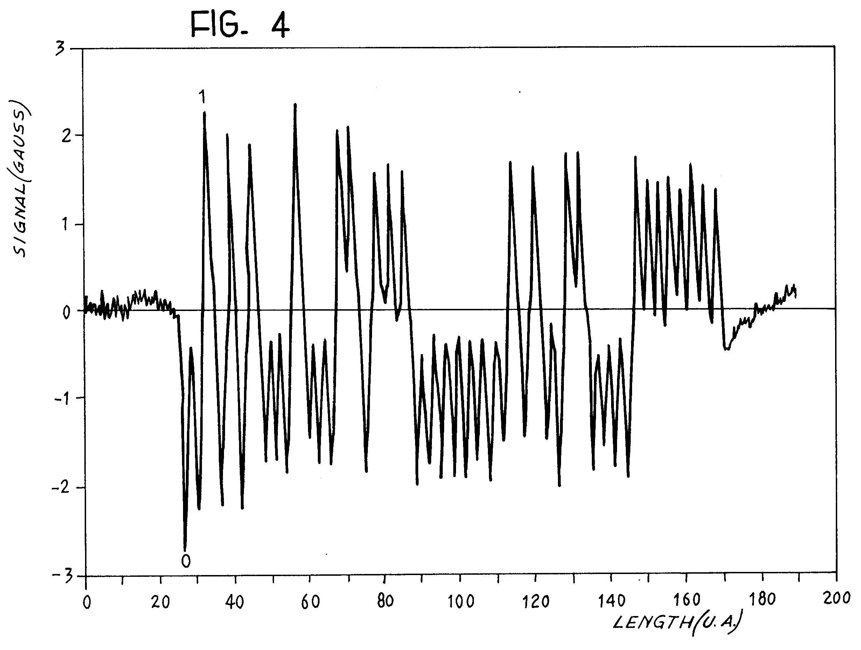

In this way, by associating for example the binary code value 1 with a north mark and the binary code value zero with a south mark, it is possible to transcribe onto the part 10 any type of information with an adequate number of marks which are spaced circumferentially around the surface 32. Figure 4, for example, shows the intensity of magnetisation due to a series of marks as a function of a spatial coordinate.

In the specific case of the crank shaft illustrated in Figure 3, it is necessary to codify five main bearing journals 36, four connecting rod journals 38, one thrust bearing face 40 and the general type of crank shaft, which can be chosen from eight different types.

Since there are six different types of bearing connectable to the crank shaft journals, it is necessary to have at least three binary digits to identify each of these (which would allow up to eight different elements to be coded), the identification of each bearing requiring three magnetic marks.

Twelve marks, subdivided into four groups of three, therefore allow the identification of the four connecting rod journals 38 and fifteen marks subdivided into five groups of three allow the identification of the five main bearing journals 36.

A single mark allows the identification of the thrust bearing face 40 since it can be associated with only two different types of bearing.

Finally, the eight different general types of crank shaft can be identified with three magnetic marks.

Overall then, thirty one marks allow the complete identification of the crank shaft. In a preferred embodiment of the invention two adjacent marks are separated by an arc on the outer cylindrical surface 32 of the flange 34 having a width of at least 5mm.

The correct recording of each mark is controlled by the sensor 26 which detects it immediately after it has been made and produces a signal which is transmitted to the CPU 12 via the amplifier 28 and the analog/digital converter 30. The CPU 12 checks the agreement with the original data transmitted to the write electromagnet 16a, and actuates the erasing electromagnet 16b and subsequently the write electromagnet 16a if agreement is not established.

A crank shaft thus marked is therefore identifiable later by apparatus including a magnetisation sensor and a device for converting signals from such sensor into binary code, and can therefore be handled conveniently in automated working and/or assembly processes.

In this connection it is evidently necessary to avoid subjecting the parts, once marked, to further magnetic fields or to temperatures greater than about 60⁰ which would partially destroy the magnetisation due to the marking in the case of steel parts.

Naturally, the principle of the invention remaining the same, the details of construction and the embodiments can be widely varied with respect to what has been described and illustrated without thereby departing from the ambit of the present invention. For example it is possible to utilise a single electromagnet governed by a single control circuit to perform both the erasing and writing operations on mechanical parts to be magnetised.

It is also possible to perform magnetic writing, for example with only north or only south poles, assuming that the other sign of the binary code is represented by the absence of magnetic writing in the zone in which it should have been made. In this case a well defined and constant reading and writing speed is required (if it is performed during the continuous motion of the part).

It is likewise possible to provide a ternary magnetic writing code, the elements of which are a north mark, a south mark and an absence of mark; in this case, too, a well defined and constant speed both of writing and reading is required, if effected during continuous movement of the part.

The ternary code would considerably reduce the number of marks and spaces of the code for a part compared with binary code.

The principle can be extended to all products made of magnetisable materials.

## Claims

1. A process for recording information by magnetisation on at least one integral ferromagnetic portion of a mechanical part (10), characterised by the fact that the said information enables the mechanical part (10) to be identified during working and/or assembly operations.

2. A process according to Claim 1, characterised by the fact that the said information is recorded in the form of a binary or ternary code.

3. A process according to any one of the preceding claims, characterised in that the intensity of magnetisation is less than or equal to five Gauss.

4. A process according to any one of the preceding claims, characterised in that the said mechanical part (10) is a crank shaft and the said integral portion of ferromagnetic material is the outer cylindrical surface (32) of an end flange (34) of the crank shaft.

5. A process according to Claim 4, characterised in that the said information identifies the connecting rod journals (38), the main bearing journals (36) and the thrust bearing face (40) of the crank shaft and its general type.

6. A process according to any of Claims from 1 to 3, characterised in that the said mechanical part is an engine block, a timing shaft, a counter-rotating shaft, a valve, a tappet, a pulley, a phonic wheel, a half shaft, a gearbox gear, a gearbox shaft, an engine fly wheel, a constant velocity joint, an engine support, a rod, a strut, a differential or a brake disc.
